# EUROPEAN PATENT APPLICATION

(11) **EP 1 551 200 A2**
(43) Date of publication of application: **06.07.2005**
(21) Application number: 04106638.2
(22) Date of filing: 16.12.2004
(51) Int. Cl.: H04Q 7/38, H04L 12/56

(54) **Method, system, and computer program for controlling resources in wireless telecommunications system**

(30) Priority: 30.12.2003 FI 20031922
(71) Applicant: Nokia Corporation, 02150 Espoo (FI)
(72) Inventor: Schwarz, Uwe, 02880 Veikkola (FI)
(74) Representative: Antila, Harri

(57) **Abstract**

A method, a system, and computer program for controlling resources in a wireless telecommunications system are provided. The wireless telecommunications system supports a multi-service, where a wireless device is entitled a plurality of simultaneous services. The multi-service is associated with radio resource preferences according to characteristics of the multi-service, which radio resource preferences define preferred radio resources selected from a plurality of radio resources to deliver the multi-service to the wireless device. The radio resource preferences may be used to allocate radio resources such that the multi-service may be delivered to the wireless device.

## Description

### Field

The invention relates to a method of controlling resources in a wireless telecommunications system, a system for controlling resources in a wireless telecommunications system, and a computer program for controlling resources in a wireless telecommunications system.

### Background

As the data transfer capacity of wireless telecommunications systems has increased, various types of digital services, such as voice calls, video streaming, and electric mail, have become available to service subscribers.

Some telecommunications systems support multi-service connections between a wireless device and a core network of the telecommunications system, in which multi-service the subscriber is entitled to a plurality of simultaneous services.

The multi-service concept complicates the resource control of the telecommunications system, since various types of services with different requirements may be combined in a multi -service. Therefore, it is desirable to consider techniques to improve the resource control in such wireless telecommunications systems.

### Brief description of the invention

An object of the invention is to provide an improved method, system, and computer program. According to an aspect of the invention, there is provided a method of controlling resources in a wireless telecommunications system supporting a multi-service, where a wireless device is entitled to a plurality of simultaneous services, in which method a multi-service is associated with radio resource preferences according to characteristics of the multi-service, which radio resource preferences define preferred radio resources selected from a plurality of radio resources to deliver the multi-service to the wireless device.

According to a second aspect of the invention, there is provided a system for controlling resources in a wireless telecommunications system supporting a multi-service, where a wireless device is entitled to a plurality of simultaneous services, the system including an associating network element for associating a multi-service with radio resource preferences according to characteristics of the multi-service, which radio resource preferences define preferred radio resources selected from a plurality of radio resources to deliver the multi-service to a wireless device.

According to a third aspect of the invention, there is provided a computer program for executing a computer process in a wireless telecommunications system supporting a multi-service, where a wireless device is entitled to a plurality of simultaneous services, the computer process including steps, the steps comprising associating the multi-service with radio resource preferences according to characteristics of the multi-service, which radio resource preferences define preferred radio resources selected from a plurality of radio resources to deliver the multi-service to a wireless device.

According to another aspect of the invention, there is provided a system for controlling resources in a wireless telecommunications system supporting a multi-service, where a wireless device is entitled to a plurality of simultaneous services, the system including: associating means for associating the multi-service with radio resource preferences according to characteristics of the multi-service, which radio resource preferences define preferred radio resources selected from a plurality of radio resources to deliver the multi-service to a wireless device.

Preferred embodiments of the invention are described in the dependent claims.

The method, system and computer program of the invention provide several advantages. The invention is based on associating multi-service with radio resource preferences such that the characteristics of the multi-service are taken into account. The radio resource preferences may be used to select appropriate radio resources for the wireless device entitled to the service, thus improving the quality of the multi-service.

### List of drawings

In the following, the invention will be described in greater detail with reference to the preferred embodiments and the accompanying drawings, in which
Figure 1 shows an example of the structure of a wireless telecommunications system;
Figure 2 shows a second example of the structure of a wireless telecommunications system;
Figure 3 shows an example of a radio cell structure;
Figure 4 illustrates the methodology of the invention according to some embodiments of the invention; and
Figure 5 illustrates the methodology of the invention according to some other embodiments of the invention.

### Description of embodiments

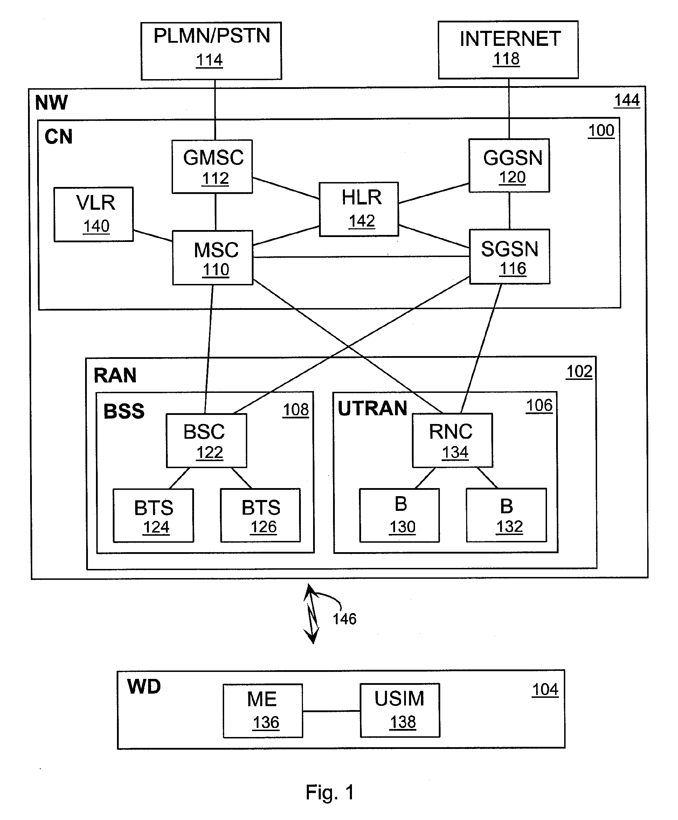

Figure 1 illustrates an example of a wireless telecommunications system which may include the following radio access systems, thereafter referred as radio systems: GSM (Global System for Mobile Communications), GERAN (GSM/EDGE Radio access network), GPRS (General Packet Radio Service), E-GPRS (EDGE GPRS), UMTS (Universal Mobile Telecommunications System), CDMA2000 (CDMA, Code Division Multiple Access), US-TDMA (US Time Division Multiple Access), TDS-CDMA (Time Division Synchronization CDMA), Bluetooth-based short-range systems and WLAN (Wireless Local Area Network). Below, examples on embodiments of the invention will be described using the GSM and UMTS radio systems as examples, without limiting the invention to these systems, as will be obvious to a person skilled in the art. The structure and the functions of the network elements are only described when relevant to the invention.

The wireless telecommunications system may be divided into a core network (CN) 100, a radio access network 102, and a wireless device (WD) 104. The core network 100 and the radio access network 102 compose a network 144 of the wireless telecommunications system.

In the example of the wireless telecommunications system, the radio access network 102 includes an UTRAN 106 (UMTS Terrestrial Radio Access Network) typically implemented with wideband code division multiple access (WCDMA) technology.

The radio access network 102 may further include a base station system (BSS) 108 implemented by time division multiple access (TDMA) technology. The BSS 108 may support, for example, GSM, GERAN, GPRS, and E-GPRS radio systems.

The wireless device 104 is typically an electric device with a radio modem and required identification means for connecting to the wireless telecommunications system over an air interface 146. For the ease of discussion, the air interface provided by different radio systems 106, 108 is ind icated with a single indicator 146.

It is clear to one skilled in the art how to implement embodiments of the invention with other radio systems, such as those mentioned above.

The wireless device 104 may be user equipment, a terminal, a mobile station, a subscriber terminal, a mobile telephone and a wireless game terminal.

The structure of the core network 100 of the example corresponds to a combined structure of the GSM and GPRS systems. The GSM network elements are typically responsible for establishing circuit-switched connections, and the GPRS network elements are responsible for establishing packet-switched connections. Some of the network elements are, however, included in both systems.

A mobile services switching centre (MSC) 110, or an MSC server (MSS), is the centre point of the circuit-switched domain of the core network 100. The same MSC 110 can be used to serve the connections to the UTRAN 106 and the BSS 108. The functions the MSC 110 performs include: switching, paging, the wireless device location registration, handover management, collection of subscriber billing information, encryption parameter management, and echo cancellation.

The core network 100 may include a gateway mobile services switching centre (GMSC) 112, which is responsible for circuit-switched connections between the core network 100 and external networks 114. An external network 114 can be for instance a public land mobile network (PLMN) or a public switched telephone network (PSTN).

A serving GPRS support node (SGSN) 116 is the centre point of the packet-switched domain of the core network 100. The main task of the SGSN 116 is to transmit packets to the wireless device 104 and receive packets to the wireless device 104 from the wireless device 104 by using the UTRAN 106 or the BSS 108. The SGSN 116 contains subscriber and location information related to the wireless device 104.

A gateway GPRS support node (GGSN) 120 is the packet-switched domain counterpart to the GMSC 112 with the exception, however, that the GGSN 120 is further capable of routing traffic from the core network 100 to the packet switched external networks 118, whereas the GMSC 112 typically routes incoming traffic. A packet switched external network 118 may include the Internet, for example.

A home location register (HLR) 142 comprises a permanent subscriber register, i.e. the following information, for instance: an international mobile subscriber identity (IMSI), a mobile subscriber ISDN number (MSISDN), an authentication key, and when the radio system supports GPRS, a packet data protocol (PDP) address.

A visitor location register (VLR) 140 contains roaming information on the wireless device 104 in the area of the MSC 110. The visitor location register 140 comprises information needed for processing services used by the wireless device 104, which is registered in a database of the VLR 140. The VLR 140 may also receive the necessary additional information from the HLR 142. The VLR 140 comprises the following information, for example: an international mobile subscriber identity (IMSI), a mobile subscriber ISDN number (MSISDN), wireless device roaming number (MSRN) and the location area (LA) of the wireless device 104.

The BSS 108 comprises a base station controller (BSC) 122 and base transceiver stations (BTS) 124, 126.

The BSC 122 is responsible for the following tasks, for instance: radio resource management of the BTS 124, 126, inter-cell handovers, frequency control, i.e. frequency allocation to the BTS 124, 126, management of frequency hopping sequences, time delay measurement on the uplink, implementation of the operation and maintenance interface, and power control. The radio resource management includes for example cell change procedures.

The BTS 124, 126 comprises at least one transceiver which implements one carrier, i.e. eight time slots, i.e. eight physical channels. Typically, one BTS 124, 126 serves one cell, but a solution is also possible wherein one BTS 124, 126 serves several sectored cells. The tasks of the BTS 124, 126 include, for example: calculation of timing advance (TA), uplink measurements, channel coding, encryption, decryption, and frequency hopping.

The UTRAN 106 comprises at least one radio network controller (RNC) 134 and nodes B 130, 132. Node B is a rather abstract concept; the term 'base transceiver station' is often used instead. A node B 130, 132 implements the radio interface 146, and performs similar tasks to the functions of the BTS 124, 126.

The RNC 134 controls one or more nodes B 130, 132. Functions that are performed by the RNC 134 include tasks such as downlink power control, handover management, and admission control.

The wireless device 104 may include two parts: mobile equipment (ME) 136 and a UMTS subscriber identity module (USIM) 138. In an embodiment, the wireless device 104 comprises an identity module 138 for each radio system 106, 108, to which the wireless device 104 can be connected.

The wireless device 104 further comprises at least one transceiver for establishing a radio link to the UTRAN 106 or the BSS 108. The wireless device 104 may further comprise an antenna, a user interface, and a battery.

USIM 138 comprises user-related information and information related to information security in particular, for instance, an encryption algorithm.

The aforementioned network elements, such as the MSC 110, the SGSN 116, the GSMC 112, the GGSN 120, the VLR 140, and the HLR 142 may be implemented with digital processors, memory means, software, switches and buses. Some of the network elements may be implemented in a shared physical unit. The detailed structure of the network elements are known to a person skilled in the art and will be described in detail only when relevant to the invention.

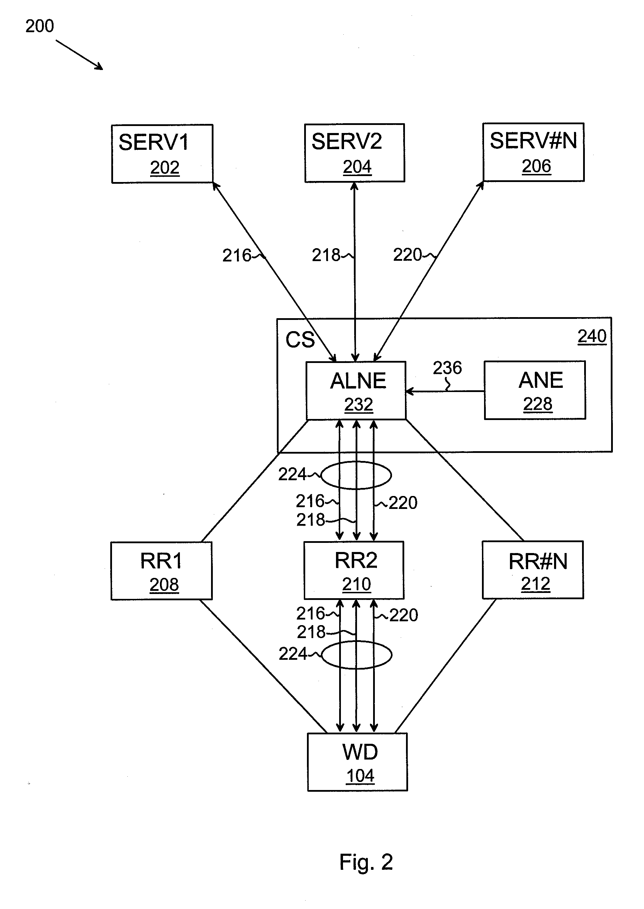

With reference to example illustrated in Figure 2, the wireless telecommunications system 200 may be connected to servers 202, 204, 206, which may provide various types of services 216, 218, 220 for the wireless device 104, which is entitled to the multi-service 224, by using the air interface 146 of the wireless telecommunications system. A server 202, 204, 206 may be located in the external networks 114, 118 or in the core network 100.

A service 216, 218, 220 is associated with a flow of digital information between the server 202, 204, 206 and the wireless device 104. The direction of the flow of the digital information may be unidirectional or bidirectional.

The service 216, 218, 220 may be, for example, a voice call service, a messaging service, an Internet access service, a game service, a navigation service, a video streaming, a WAP (Wireless Application Protocol) service, or a file transfer service.

The services 216, 218, 220 may be divided into QoS (Quality of Service) classes, such as conversational class, interactive class, streaming class, and background class, according to the required quality of the service 216, 218, 220.

A service 216, 218, 220 may have characteristics, such as the required bandwidth, the transmission delay requirement, and the error tolerance. The traffic characteristics associated with single services 216, 218, 220 are known to one skilled in the art, and will be described in detail only when relevant to the present solution.

A multi-service 224 is typically a combination of services 216, 218, 220, which may be provided simultaneously for the wireless device 104. For example, the wireless device 104 may have an ongoing voice call and a data download at the same time, when connected to a multi-service 224.

The multi-service 224 is delivered to the wireless device 104 over the air interface 146 of the wireless telecommunications system by using one or more radio resources 208, 210, 212.

A radio resource 208, 210, 212 is typically provided by the radio access network 102, and may include a network element, such as a BTS 124, 126, a node B 130, 132, or a radio system 106, 108.

A radio resource 208, 210, 212 may also include more abstract concepts, such as a frequency resource, a temporal resource, a coding resource, an antenna resource, a radio cell, or any resource contributing to delivering the multi-service 224 to the wireless device 104.

A wireless device 104, which is entitled to the multi-service 224, has a right to use a set of simultaneous services 216, 218, 220. The right may be based on a legal agreement between the service provider and the service subscriber i.e. holder of the wireless device 104. The legal agreement may define the single services 216, 218, 220 in the multi-service 224. The service provider typically manages the servers 202, 204, 206 and the content of the services 216,218,220.

The service provider and the network operator, which operates the network 114 or a portion of a shared network 114, may have a mutual legal agreement, which defines the use of the network 144 when delivering the multi-service 224 to the wireless device 104.

In an embodiment of the invention, the multi-service 224 is associated with radio resource preferences according to characteristics of the multi-service 224. The radio resource preferences define preferred radio resources from a plurality of radio resources 208, 210, 212 to deliver the multi-service 224 to the wireless device 104. The radio resource preferences may further define service priorities according to which the multi-services 224 are prioritised in the network 144.

The characteristics according to which the multi-service 224 is associated with the radio resource preferences are typically associated with traffic requirements of the multi-service 224.

In an embodiment, the traffic requirement is the bandwidth requirement of the multi-service 224. In such a case, the radio resource preferences are typically set as to deliver the multi-service 224 at a data rate, which fulfils the bandwidth requirement.

In a second embodiment, the traffic requirement is the transmission delay requirement of the multi-service 224. In such a case, the radio resource preferences are typically set as to provide the multi-service 224 with transmission delay, which fulfils the transmission requirement.

In another embodiment, the traffic requirement is the error tolerance of the multi-service 224. In such a case, the radio resource preferences are typically set as to fulfil the error tolerance requirement.

In an embodiment, associating the multi-service 224 with is associated with the radio resource preferences according to the combination of the traffic requirements of the services 216, 218, 220 in the multi-service 224, such as those listed above.

In an embodiment, the multi-service 224 may be associated with the radio resource preferences according to the overall capacity requirement of the multi-service 224.

In an embodiment, the multi-service 224 may be associated with the radio resource preferences according to the most restricting traffic requirements of the individual services 216, 218, 220 in the multi-service 224. Such a most restricting requirement may be, for example, the data transfer capacity requirement.

In an embodiment, the characteristics and the traffic requirements of the multi-service 224 are stored as a multi-service profile, which may be a list-like data base including a list of the services 216, 218, 220 and the traffic requirements of the multi-service 224. The database may be included in the subscriber information in the HLR 142, and transferred to an appropriate VLR 140, when the wireless device 104 moves outside the home location area. In an embodiment, the multi-service 224 is associated with radio resource preferences according to the multi-service capabilities of the wireless device 104.

The multi-service capabilities of the wireless device 104 may be defined by a user service profile associated with the wireless device 104. The user service profile may define, for example, the services 216, 218, 220, to which the wireless device 104 is entitled. The user service profile may further define user-specific limits for the use of the service 216, 218, 220. For example, a multi-service 224 may include data transfer service, but the maximum data rate is limited by a predefined limit. In such a case the list of services includes service-specific information, which indicates the limitations of each service 216, 218, 220 in the multi-service 224. The user-specific limits may be dynamically adjustable. For example, the limits may be stricter, when the load of the network 114 is presumed to be high. The user-specific limits may be defined in terms of time of the day, the time of the week, the time of the year, for example.

The user service profile may include hard restrictions. For example, the subscriber may not be entitled to parallel circuit-switched and packet-switched services in GSM/GPRS system of the BSS 108 due to the lack of multi-service capability of the wireless device 104. As a result, the multi-service 224 may be associated with UTRAN 106 in order to enable providing a multi-service 224 including, for example a voice call service and video streaming, to the wireless device 104.

The user service profile may also have soft restrictions. For example simultaneous voice and web-browsing service are preferably operated in the UTRAN 106, event though allowed also in the GSM/GPRS of the BSS 108. However, the UTRAN 106 is selected as the preferred radio resource since the UTRAN 106 allows for faster web-browsing service due to wider bandwidth and higher bit transfer rates.

The multi-service capability of the wireless device 104 may further be defined by the technical characteristics of the wireless device 104. For example, some services, such as electric mail messaging and video streaming may not be supported by the wireless device 104, and therefore may not be included in the multi-service list.

In an embodiment, the multi-service capability of the wireless device 104 is defined whether the wireless device 104 supports parallel use of circuit switched and packet switched domains. If, for example, the wireless device 104 supports the simultaneous use of the circuit-switched and packet-switched domains, the wireless device 104 is capable of using simultaneous video graphics and a speech call to the wireless device 104 by using the BSS 108.

In an embodiment, the wireless device 104 supports video conferencing and the video-conferencing is included in the multi-service 224. In such a case, the video conferencing requirements may be taken into account, when associating the multi-service 224 with the radio resource preferences.

In an embodiment, the wireless device 104 supports the HSDPA functionality (High Speed Data Packet Access), which enables high-data rate down link data transfer in the GSM system. If the multi-service involves high-data rate down link data transfer, the preferred radio resources may be those supporting the HSDPA functionality.

The user service profile may included in the subscriber information in the HLR 142, and transferred to an appropriate VLR 140, when the wireless device 104 moves outside the home location area.

In an embodiment, the multi-service 224 is associated with radio resource preferences according to the multi-service capabilities of the network 114 of the wireless telecommunications system.

The multi-service capabilities of the network 144 may be defined by the technical characteristics of the network 144. The multi-service capability may have local aspects due to the structure of the radio access network 102.

The multi-service capabilities of the network 144 may depend on the characteristics and the combination of the radio systems 106, 108 included in the radio access network 102. For example, the multi-service capabilities of a radio access network 102 including only the UTRAN 106 is different from a radio access network including both the UTRAN 106 and the BSS 108.The multi service capabilities of the network 144 may be defined by a network multi-service profile, which may include the types of services, which the network 144 supports. The network multi-service profile may be a list-like database, which includes the supported services 216, 218, 220 and possible the limits, which restrict the use of the services 216, 218, 220. The database may be stored in the MSC 110, the SGSN 116 or a corresponding network element.

In an embodiment, the multi-service capability of the network 114 is defined whether the network 114 supports a simultaneous use of circuit switched and packet switched domains for the wireless device 104. If, for example, the BSS 108 supports simultaneous use of circuit-switched and packet-switched domains, the network 114 is capable of delivering simultaneous video graphics and a speech call to the wireless device 104 by using the BSS 108.

Figure 2 shows a control system 240, which includes an associating network element (ANE) 228, which associates the multi-service 224 with radio resource preferences according to the characteristics of the multi-service 224.

In an embodiment, the associating network element 228 includes the characteristics and/or QoS classes of the services 216, 218, 220 in the multi-service 224. The associating network element 228 may further include resource information on the radio resources 208, 210, 212, which may be available to the wireless device 104 in the current location in the network 144. The radio resource preferences may be deduced by comparing the characteristics of the multi-service 224 and the QoS classes with the resource information.

In an embodiment, the associating network element 228 associates the multi-service 224 with radio resource preferences according to the positioning accuracy of the telecommunications system. The positioning is typically related to define a position of the wireless device 104. The positioning may be based on a direction analysis of an uplink signal from the wireless device 104. The positioning accuracy may be used, for example, when selecting a preferred radio cell for the wireless device 104. With high positioning accuracy, the wireless device 104 may be associated with a small size radio cell, such as a micro-cell. With low position accuracy, the wireless device 104 may be associated with an umbrella radio cell.

In an embodiment, the associating network element 228 associates the multi-service 224 with radio resource preferences according to the actual load of the network 114 of the wireless telecommunications system. If, for example, the preferred radio resource is loaded, the secondly preferred radio resource may be selected as the preferred radio resource.

In an embodiment, the associating network element 228 associates the multi-service 224 with radio resource preferences according to a presumed battery consumption of the wireless device 104 when using the preferred radio resources. For example, WCDMA based traffic consumes battery more than the GSM based traffic, and the GSM based system may be preferred over the UTRAN if a low battery consumption is needed.

In an embodiment, the associating network element 228 associates the multi-service 224 with radio resource preferences according to coverage of the network 114 of the wireless telecommunications system. The network operator may have a limited coverage at the area of the wireless device 104, and sets the radio resource preferences such that the wireless device 104 remains at the operator's coverage area as long as possible.

In an embodiment, the associating network element 228 associates the multi-service 224 with radio resource preferences according to network-operator-specific use of the network 114 of the wireless telecommunications system, which network operator provides the multi-service 224. The network may be shared between operators, which may prefer using certain radio resources over other radio resources. There may be operator-specific multi-service profiles, which define the radio resource preferences according to the characteristics of the multi-services 224. It is possible, for example, that certain multi-services 224 are enabled for limited group of operators sharing the network 114.

In an embodiment, the operator-specific multi-service profiles may be dynamic such that the radio resource preferences depend on the presumed load of the network 114. A dynamic use of the network 114 may be based on the time of the day, the time of the week, and the time of the year, for example.

The multi-service 224 may be associated with the radio resource preferences for example, when the wireless device 104 entitled to the multi-service 224 initiates a connection to the wireless telecommunications system, changes a cell, or initiates a roaming procedure. It should be noted, however, that the associating procedure does not necessarily require the wireless device 104 to use the multi-service 224, but provides with a standby state for the wireless device 104 in such a way, that handover situations are avoided when the actual connection to the multi-service 224 is established.

In an embodiment, the associating network element 228 associates the multi-service 224 with the radio resource preferences according to the characteristics of the multi-service 224 requested by the wireless device 104. The multi-service 224 may or may not be associated with the radio resource preferences before the request. The request may, however, specify the radio resource preferences according to the required data rate of the multi-service 224 and possibly the prevailing load of the network 144. It is possible, for example, that the wireless device 104 is connected to a single service, such as a voice call service. In the meantime another service, such as video streaming, is requested by the wireless device 104. In such a case, the multi-service 224, which includes the voice call service and the video streaming, is associated with the radio resource preferences. As an example, the wireless device 104 may first be connected to the BSS 108 supporting only single voice call service. The radio resource preferences may prefer the UTRAN 108, when multi-service 224 is requested.

In an embodiment, if the multi-service 224 includes only circuit switched services 216, 218, 220, the associating network element 228 is included in the MSC 110.

In an embodiment, if the multi-service 224 includes only packet switched services 216, 218, 220, the associating network element 228 is included in the SGSN 116.

In an embodiment, if the multi-service 224 includes both packet switched services 216, 218, 220 and a circuit switched services 216, 218, 220, the associating network element 228 is included in the BSC 122 or the RNC 134.

In an embodiment, if the multi-service 224 includes both packet switched services 216, 218, 220 and a circuit switched services 216, 218, 220, the associating network element 228 is included in a core network element, such as the GMSC 112 and the GGSN 120.

In an embodiment, the associating network element 228 selects a preferred radio system for the wireless device 104 from a group of radio systems 106, 108 of the wireless telecommunications system according to the radio resource preferences. The associating network element 228 may have resource information for each radio system 106, 108 in the group. The resource information may in this case include the bandwidths of the air interfaces provided by the radio systems 208, 210, 212 and information on the switching method.

For example, the multi-service 224 includes a circuit switched voice call service and a transparent data transfer service. In such a case, the radio resource preferences may prioritise the UTRAN 106 over the BSS 108.

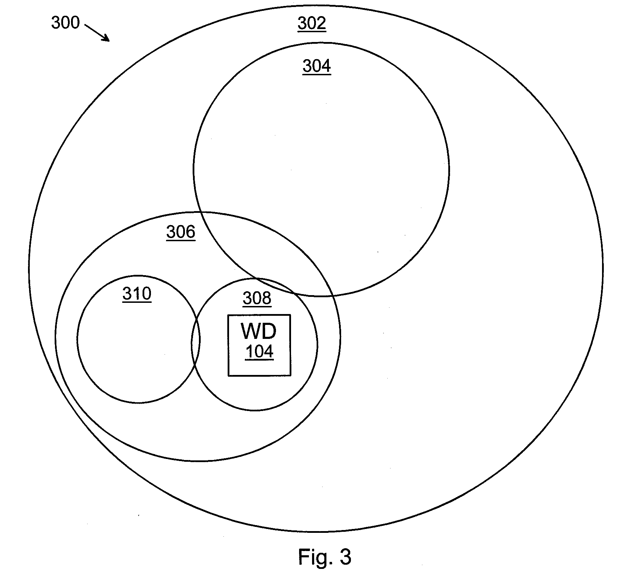

Figure 3 shows an example of a cell structure 300, which includes at least two radio cells 302 to 310. The radio cells 302 to 310 may be formed by B nodes 130, 132 and may have internal structure, such as antenna beams.

In an embodiment, the associating network element selects a preferred radio cell for the wireless device 104 from a plurality of radio cells 302, 304, 306, 308, 310 of the wireless telecommunications system according to the radio resource preferences. The associating network element 228 may have resource information for each radio cell 302 to 310. The resource information may in this case include the bandwidths of the radio cells 302 to 310, capacities of the radio cells 302 to 310, and information on the switching method. Furthermore, the multi-service capability may be radio-cell-specific.

The radio resource preferences typically define cell priorities according to which the wireless device 104 is encouraged to select the serving radio cell in preference to other radio cells.

The cell priorities are typically based on different capacities of the cells 302 to 310 or the mobility of the wireless device 104. The mobility of the wireless device 104 may be deduced from the services being used. For example, a wireless device 104 using the web-browsing service is likely in a stationary position. The mobility of the wireless device may also be measured from the frequency of cell updates of the wireless device 104.

If the serving radio system is the UTRAN 106, for example, umbrella cells 302 may be used for multi-services, whose capacity requirement is relatively low. Such multi-services are, for example, combination of packet switched voice call service and a WAP service.

Micro cells 304, 306 may be used for a multi-service including, for example, for a combination of voice call and a file transfer services.

Pico-cells 308 may be used, for example, for a combination of video streaming and a file transfer service.

The cell structure 300 may also include GPRS cells and EGPRS cells. In such a case, the cell may be selected according to factors, such as the cell size, cell capacity, and the cell load.

With reference to Figure 2, in an embodiment, the control system 240 includes an allocating network element 232 for allocating radio resources to the wireless device 104 according to the radio resource preferences.

In the example of Figure 2, the radio resource 210 is selected as the preferred radio resource, which is then allocated to the wireless device 104. The associating network element 228 provides the allocating network element 232 with a signal 236, which carries the radio resource preference information. The allocating network element 232 may route the multi-service 224 via the preferred radio resources. The allocating network element 232 may also inform another network element, for example through signalling, to perform routing so that the multi-service 224 uses the preferred radio resources.

In an embodiment the allocating network element 232 initiates an inter-cell handover from the current radio cell to the preferred radio cell according to the radio resource preferences transferred by the signal 236. After initialisation, the wireless device 104 is handed over from the current radio cell to the preferred radio cell. In such a case, the allocating network element may be located in the RNC 134 or the BSC 122, for example.

In an embodiment, the allocating network element 232 initiates an inter-system handover procedure according to the radio resource preferences transferred by the signal 236. After initialisation, the wireless device 104 is handed over from a serving radio system to the preferred radio system. In such a case, the allocating network element 232 may locate in the core network 100, for example in the MSC 110, the SGSN 116, the GMSC 112, or the GGSN 120. In an embodiment, the allocating network element 232 may be the RNC 134 or the BSC 122.

In an embodiment, the allocating network element 232 releases radio resources for the wireless device 104 according to the radio resource preferences. Radio resources may be released, for example, by handing over a connection of a second wireless device. In such a way, the wireless device 104 under consideration may be located in a radio system and/or a radio cell, which is capable of satisfying the multi-service profile of the wireless device 104.

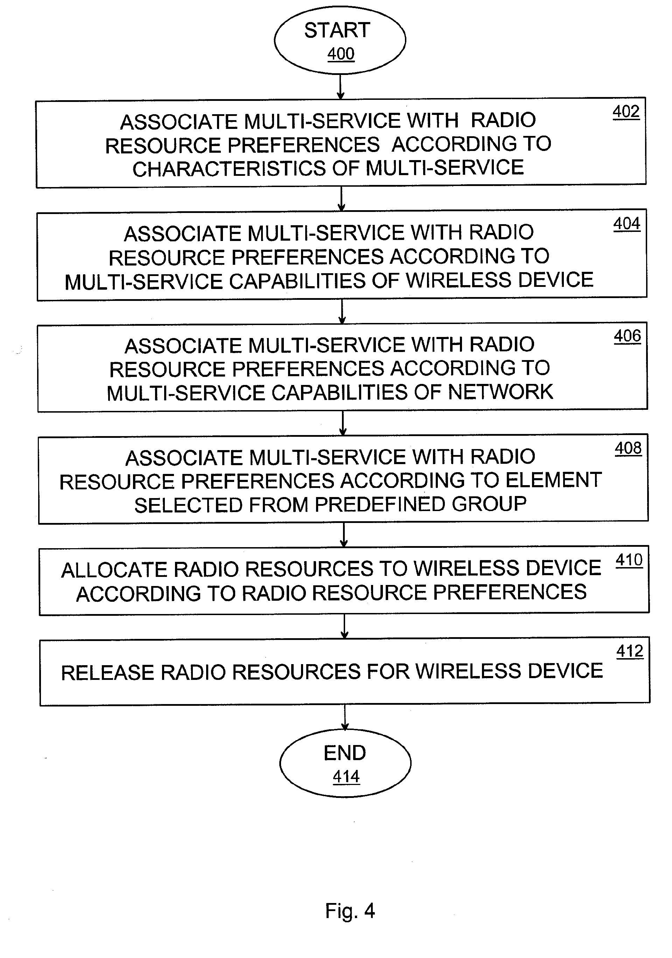

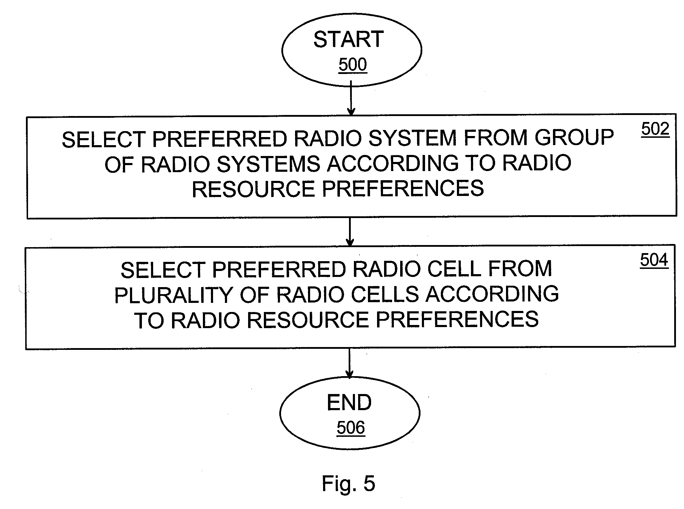

With reference to Figures 4 and 5, the methodology according to embodiments of the invention is shown with flow chart presentation.

With reference to Figure 4, the method is started in 400.

In 402, the multi-service is associated with radio resource preferences according to characteristics of the multi-service, which radio resource preferences define preferred radio resources selected from a plurality of radio resources to deliver the multi-service to the wireless device.

In 404, the multi-service is associated with radio resource preferences according to the multi-service capabilities of the wireless device.

In 406, the multi-service is associated with radio resource preferences according to the multi-service capabilities of the network of the wireless telecommunications system.

In 408, the multi-service is associated with radio resource preferences according to at least one element selected from a predefined group including: the positioning accuracy of the telecommunications system, the actual load of the network of the wireless telecommunications system, a presumed battery consumption of the wireless device when using the preferred radio resources, coverage of the network of the wireless telecommunications system, network-operator-specific use of the network of the wireless telecommunications system, which network operator provides the multi-service.

In 410, radio resources are allocated to the wireless device according to the radio resource preferences.

In 412, radio resources are released for the wireless device according to the radio resource preferences.

In 414, the method ends.

With reference to Figure 5, further embodiments of the invention are shown.

In 500, the method is started.

In 502, a preferred radio system is selected for the wireless device from a group of radio systems of the wireless telecommunications system according to the radio resource preferences.

In 504, a preferred radio cell is selected for the wireless device from a plurality of radio cells of the wireless telecommunications system according to the radio resource preferences.

In 506, the method ends.

In an aspect, the invention provides a computer program for executing a computer process, of which embodiments are shown in Figures 4 and 5.

The computer program may be implemented with a digital processor and memory means located in the aforementioned network elements.

The computer program may be stored in a data carrier, such as a CD (Compact Disc), a hard drive, a diskette, and a portable memory unit. The computer program may further be transferred with en electric signal in a data network, such as the Internet.

Even though the invention is described above with reference to an example according to the accompanying drawings, it is clear that the invention is not restricted thereto but it can be modified in several ways within the scope of the appended claims.

## Claims

1. A method of controlling resources in a wireless telecommunications system supporting a multi-service, where a wireless device is entitled to a plurality of simultaneous services, the method **characterized by**
associating (402) a multi-service with radio resource preferences according to characteristics of the multi-service, which radio resource preferences define preferred radio resources selected from a plurality of radio resources to deliver the multi-service to the wireless device.

2. The method of claim 1, **characterized by** associating (402) the multi-service with the radio resource preferences according to at least one element selected from a group including: the bandwidth requirement of the multi-service, the transmission delay requirement of the multi-service, and the error tolerance of the multi-service.

3. The method of claim 1, **characterized by** associating (404) the multi-service with the radio resource preferences according to the multi-service capabilities of the wireless device.

4. The method of claim 1, **characterized by** associating (406) the multi-service with the radio resource preferences according to multi-service capabilities of the network of a wireless telecommunications system.

5. The method of claim 1, **characterized by** associating (408) the multi-service with the radio resource preferences according to at least one element selected from a predefined group including: the positioning accuracy of the wireless telecommunications system, the actual load of the network of the wireless telecommunications system, a presumed battery consumption of the wireless device when using the preferred radio resources, coverage of the network of the wireless telecommunications system, and a network-operator-specific use of the network of the wireless telecommunications system, which network operator provides the multi-service.

6. The method of claim 1, **characterized by** allocating (410) radio resources to the wireless device according to the radio resource preferences.

7. The method of claim 1, characterized releasing (412) radio resources for the wireless device according to the radio resource preferences.

8. The method of claim 1, **characterized by** selecting (502) a preferred radio system for the wireless device from a group of radio systems of the wireless telecommunications system according to the radio resource preferences.

9. The method of claim 1, **characterized by** selecting (504) a preferred radio cell for the wireless device from a plurality of radio cells of the wireless telecommunications system according to the radio resource preferences.

10. A system for controlling resources in a wireless telecommunications system supporting a multi-service, where a wireless device is entitled to a plurality of simultaneous services, the system **characterized in that** the system includes:
an associating network element (228) for associating a multi-service (224) with radio resource preferences according to characteristics of the multi-service (224), which radio resource preferences define preferred radio resources selected from a plurality of radio resources (208, 210, 212) to deliver the multi-service (224) to a wireless device (104).

11. The system of claim 10, **characterized in that** the associating network element (228) is configured to associate the multi-service (224) with the radio resource preferences according to a bandwidth requirement of the multi-service (224).

12. The system of claim 10, **characterized in that** the associating network element (228) is configured to associate the multi-service (224) with the radio resource preferences according to the transmission delay requirement of the multi-service (224).

13. The system of claim 10, **characterized in that** the associating network element (228) is configured to associate the multi-service (224) with the radio resource preferences according to the error tolerance of the multi-service (224).

14. The system of claim 10, **characterized in that** the associating network element (228) is configured to associate the multi-service (224) with the radio resource preferences according to the multi-service capabilities of the wireless device (104).

15. The system of claim 10, **characterized in that** the associating network element (228) is configured to associate the multi-service (224) with the radio resource preferences according to multi-service capabilities of a network (144) of the wireless telecommunications system.

16. The system of claim 10, **characterized in that** the associating network element (228) is configured to associate the multi-service (224) with radio resource preferences according to the positioning accuracy of the wireless telecommunications system.

17. The system of claim 10, **characterized in that** the associating network element (228) is configured to associate the multi-service (224) with the radio resource preferences according to an actual load of a network (144) of the wireless telecommunications system.

18. The system of claim 10, **characterized in that** the associating network element (228) is configured to associate the multi-service (224) with the radio resource preferences according to the presumed battery consumption of the wireless device (224) when using the preferred radio resources.

19. The system of claim 10, **characterized in that** the associating network element (228) is configured to associate the multi-service (224) with the radio resource preferences according to the coverage of a network (144) of the wireless telecommunications system,

20. The system of claim 10, **characterized in that** the associating network element (228) is configured to associate the multi-service (224) with the radio resource preferences according to the network-operator-specific use of a network (144) of the wireless telecommunications system, which network operator provides the multi-service (224).

21. The system of claim 10, **characterized in that** the system includes an allocating network element (232) for allocating radio resources to the wireless device (104) according to the radio resource preferences.

22. The system of claim 10, **characterized in that** the allocating network element (232) is configured to release radio resources for the wireless device (104) according to the radio resource preferences.

23. The system of claim 10, **characterized in that** the associating network element (228) is configured to select a preferred radio system for the wireless device (104) from a group of radio systems (106, 108) of the wireless telecommunications system according to the radio resource preferences.

24. The system of claim 10, **characterized in that** the associating network element (228) is configured to select a preferred radio cell for the wireless device (104) from a plurality of radio cells (302, 304, 306, 308, 310) of the wireless telecommunications system according to the radio resource preferences.

25. The system of claim 10, **characterized in that** the associating network element (228) is selected from a group including: a mobile services switching center (110), a serving GPRS support node (116), a radio network controller (134), a base station controller (122), a gateway mobile services switching centre (112), a gateway GPRS support node (120), and a home location register (142).

26. A computer program for executing a computer process in a wireless telecommunications system supporting a multi-service, where a wireless device is entitled to a plurality of simultaneous services, **characterized in that** the computer process includes steps, the steps comprising
associating (402) a multi-service with radio resource preferences according to characteristics of the multi-service, which radio resource preferences define preferred radio resources selected from a plurality of radio resources to deliver the multi-service to a wireless device.

27. The computer program of claim 26, **characterized in that** the computer process further comprises the step of
associating (402) the multi-service with the radio resource preferences according to at least one element selected from a group including: the bandwidth requirement of the multi-service, the transmission delay requirement of the multi-service, the error tolerance of the multi-service.

28. The computer program of claim 26, **characterized in that** the computer process further comprises the step of
associating (404) the multi-service with the radio resource preferences according to multi-service capabilities of the wireless device.

29. The computer program of claim 26, **characterized in that** the computer process further comprises the step of
associating (406) the multi-service with the radio resource preferences according to multi-service capabilities of a network of the wireless telecommunications system.

30. The computer program of claim 26, **characterized in that** the computer process further comprises the step of
associating (408) the multi-service with the radio resource preferences according to at least one element selected from a predefined group including: a positioning accuracy of the wireless telecommunications system, an actual load of a network of the wireless telecommunications system, presumed battery consumption of the wireless device when using the preferred radio resources, coverage of the network of the wireless telecommunications system, and network-operator-specific use of the network of the wireless telecommunications system, which network operator provides the multi-service.

31. The computer program of claim 26, **characterized in that** the computer process further comprises the step of
allocating (410) radio resources to the wireless device according to the radio resource preferences.

32. The computer program of claim 26, **characterized in that** the computer process further comprises releasing (412) radio resources for the wireless device according to the radio resource preferences.

33. The computer program of claim 26, **characterized in that** the computer process further comprises the step of
selecting (502) a preferred radio system for the wireless device from a group of radio systems of the wireless telecommunications system according to the radio resource preferences.

34. The computer program of claim 26, **characterized in that** the computer process further comprises the step of
selecting (504) a preferred radio cell for the wireless device from a plurality of radio cells of the wireless telecommunications system according to the radio resource preferences.

35. A system for controlling resources in a wireless telecommunications system supporting a multi-service, where a wireless device is entitled to a plurality of simultaneous services, the system **characterized in that** the system includes:
associating means (228) for associating the multi-service (224) with radio resource preferences according to characteristics of the multi-service (224), which radio resource preferences define preferred radio resources selected from a plurality of radio resources (208, 210, 212) to deliver the multi-service (224) to a wireless device (104).
